(19) **Europäisches Patentamt / European Patent Office / Office européen des brevets**

(11) **EP 1 958 451 B1**

(12) **EUROPEAN PATENT SPECIFICATION**

(45) Date of publication and mention
of the grant of the patent:
**19.03.2014 Bulletin 2014/12**

(51) Int Cl.:
**H04N 19/00** *(2014.01)*

(21) Application number: **06821541.7**

(86) International application number:
**PCT/IB2006/054422**

(22) Date of filing: **24.11.2006**

(87) International publication number:
**WO 2007/063465 (07.06.2007 Gazette 2007/23)**

(54) **MOTION VECTOR FIELD CORRECTION**

BEWEGUNGSVEKTOR-FELDKORREKTUR

CORRECTION DE CHAMP DE VECTEURS DE MOUVEMENT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **30.11.2005 EP 05111497**

(43) Date of publication of application:
**20.08.2008 Bulletin 2008/34**

(73) Proprietor: **Entropic Communications, Inc.**
**San Diego, CA 92121 (US)**

(72) Inventor: **GUERREIRO, Rui F.C.**
**NL-5656 AA Eindhoven (NL)**

(74) Representative: **Epping - Hermann - Fischer
Patentanwaltsgesellschaft mbH**
**Postfach 20 07 34**
**80007 München (DE)**

(56) References cited:
WO-A-01/88852       WO-A-03/067523
WO-A-2005/022922    WO-A-2005/027525
GB-A- 2 279 531

• **ROBERT P ED - YASUDA H ET AL: "MOTION
COMPENSATING INTERPOLATION
CONSIDERING OCCLUDING, APPEARING AND
DISAPPEARING AREAS" SIGNAL PROCESSING
OF HDTV, 3. TURIN, SEPT. 4 - 6, 1991,
PROCEEDINGS OF THE INTERNATIONAL
WORKSHOP ON HDTV AND BEYOND,
AMSTERDAM, ELSEVIER, NL, vol. WORKSHOP
4, 4 September 1991 (1991-09-04), pages 329-341,
XP000379970**
• **KAUP A ET AL: "Efficient prediction of uncovered
background in interframe coding using spatial
extrapolation" ACOUSTICS, SPEECH, AND
SIGNAL PROCESSING, 1994. ICASSP-94., 1994
IEEE INTERNATIONAL CONFERENCE ON
ADELAIDE, SA, AUSTRALIA 19-22 APRIL 1994,
NEW YORK, NY, USA,IEEE, vol. v, 19 April 1994
(1994-04-19), pages V-501, XP010133695 ISBN:
0-7803-1775-0**
• **HAAN DE G ET AL: "TRUE-MOTION ESTIMATION
WITH 3-D RECURSIVE SEARCH BLOCK
MATCHING" IEEE TRANSACTIONS ON CIRCUITS
AND SYSTEMS FOR VIDEO TECHNOLOGY, IEEE
SERVICE CENTER, PISCATAWAY, NJ, US, vol. 3,
no. 5, 1 October 1993 (1993-10-01), pages 368-379,
XP000414663 ISSN: 1051-8215 cited in the
application**

**Description**

The invention relates to a motion vector correction unit for correcting a motion vector field comprising motion vectors of respective regions of an image.

The invention further relates to an image processing apparatus comprising such a motion vector correction unit, to a method of correcting a motion vector field comprising motion vectors of respective regions of an image and to a computer program product to be loaded by a computer arrangement, comprising instructions for correcting a motion vector field comprising motion vectors of respective regions of an image.

A motion vector of a region typically indicates a direction and a magnitude of movement of the region from an image to the next or from the next to the previous image in a sequence of images. A motion vector field comprising a set of motion vectors can be used to substantially define all the motions in an input image. The motion vector field is useful in predicting the next image from the previous image in a sequence of images involving motion of objects in a scene, for e.g. a video sequence. When there is a movement of a foreground object, which is closer to the camera against background objects, some regions of the background objects are covered and some other regions of the background objects are uncovered. The covering and uncovering regions are referred generally as occlusion regions.

Estimation of a motion vector field by a motion estimation unit being designed to estimate motion vectors based on comparing pixel values of pairs of images is known from the article "True-motion estimation with 3D-recursive Search Block Matching", by G. de. Haan et. al in IEEE Transactions on Circuits and Systems for Video Technology, vol. 3, no. 5, October 1993, pages 368-379. Other motion vector estimation units are also possible. A motion estimation unit, estimating motion between two consecutive images of a video sequence cannot perform well in occlusion regions, as it is typical for these regions that some parts of background information are available in either of the two images. An estimated motion vector field therefore, might comprise erroneous motion vectors caused by covering and/or uncovering regions.

Estimating and assigning the correct motion vectors to occlusion regions i.e. correcting the motion vector field of an image is an area of active research. By correct assignment of motion vector, is meant, assigning the motion vector of the background object to the covering region in the previous image and assigning the motion vector of the background object to the uncovering region in the next image. Assigning the motion vector of the foreground object to the uncovering region in the previous image and assigning the motion vector of the foreground object to the covering region in the next image are also considered as correct assignment. A wrongly assigned motion vector can cause artifacts such as 'halo effect' at the boundaries of objects, when a next image is predicted from the previous image or interpolated from two consecutive images for e.g. in temporal up conversion.

A method and unit for determining the correct motion vectors in occlusion regions of a current image by choosing appropriate motion vectors estimated from the current to the previous and from the current to the next image is known in prior art. An embodiment of such a method is described in a patent application published under number WO 03/067523. In this patent application, a method of assigning a motion vector estimated from the current to the previous image for a covering area in the current image and assigning a motion vector estimated from the current to the next image to an uncovering area in the current image is described. Accordingly, three consecutive images are required for assigning a correct motion vector to an occlusion region of an image resulting in a higher latency compared to motion estimation and correction with two consecutive images. Higher latency is undesirable in some consumer applications for e.g. television wherein sound has to be synchronous to the video stream.

"Motion compensating interpolation considering occluding, appearing and disappearing areas", by P. Robert, Signal Processing of HDTV III, 1992 Elsevier Science Publishers B.V., describes a method of correcting a motion vector in an occlusion region by using interpolation from neighbouring motion vectors.

It is an object of the invention to provide a motion vector correction unit as mentioned in the opening paragraph with a reduced latency compared to the unit described in prior art.

This object is achieved in that the motion vector correction unit comprises:

- an analyzer arranged to analyze image contents of an occlusion region and image contents of a number of non-occlusion regions in a spatial neighborhood of the occlusion region of the image and to obtain respective image property values of the occlusion region and the non-occlusion regions;
- an evaluator arranged to evaluate similarity values which are based on an image property value of the occlusion region and further image property values of the respective non-occlusion regions;
- a selector arranged to select a particular non-occlusion region from the number of non-occlusion regions on basis of the corresponding similarity value; and
- a vector replacement unit arranged to replace the motion vector of the occlusion region by the motion vector of the selected particular non-occlusion region.

The motion vector correction unit according to the invention is capable of correcting an estimated motion vector field by using two consecutive images. With correcting a motion vector, is meant replacing the erroneous motion vector previously assigned to the occlusion region with the most probably correct motion vector. In other words, correcting motion vector field means replacing the motion vector of the covering region by the motion vector of the background object in the previous image and replacing the motion vector of the uncovering region by the motion vector of the background object in the current image. In case of covering region occurring in the current image, the motion vector of the foreground object has to be assigned. An estimated motion vector field with detected occlusion regions is made available at the input of the motion vector correction unit according to the invention. The book "Video processing for multimedia systems" by G. de. Haan, University Press Eindhoven, 2000, ISBN, 90-9014015-8, in chapter 4, describes methods for the detection of occlusion regions and for the covering/ uncovering classification which are preferably used. However, other methods of motion vector field estimation from two consecutive images, disclosed in literature can also be employed.

The motion vectors being computed for an occlusion region typically comprise a motion vector which corresponds with the movement of the foreground, i.e. the foreground motion vector and a motion vector which corresponds with the movement of the background i.e. the background motion vector. However, it is not initially known as to which one of the motion vector corresponds to the background object or to the foreground object. The invention provides a solution to this problem by providing an analyzer for analyzing the image contents of an occlusion region and a number of non-occlusion regions in the neighborhood of the occlusion region to extract an image property value of each region. An evaluator computes similarity values based on the image property value of the occlusion region with each one of the non-occlusion regions. A selector selects the best matching non-occlusion region based on the similarity values. A vector replacement unit replaces the erroneous motion vector of the occlusion region by the motion vector of the particular non-occlusion region which is selected by the selector.

The invention is based on the insight that the image contents of the covering region in an image substantially matches with the image contents of the background object of the previous image and the image properties of the uncovering region substantially matches with the background regions of the current image. Therefore it is possible to select the best matching non-occlusion region within a predefined neighborhood of an occlusion region. A vector replacement unit replaces the motion vector of the occlusion region by motion vectors of the selected non-occlusion region. In this manner, the motion vector correction unit according to the invention correctly assigns the background motion vector to the covering region in the previous image and the background motion vector to the uncovering region in the current image. Motion vector estimation, occlusion detection and classification can be done on a pair of images. Thus the motion vector correction unit typically requires two consecutive images of a sequence of images and therefore works with reduced latency compared to the prior art unit that requires three consecutive images.

In an embodiment of the motion vector correction unit according to the invention, the analyzer is arranged to obtain a texture parameter as an image property value

An image property value indicating a texture measure of a region can be obtained by analyzing the contents of the region. A similarity value based on the texture content of the image is a useful measure for comparing regions with aim of selecting the best matching region. Any one of the texture property measures such as DCT coefficients, Hadamard transform coefficients or statistical measures such as average, variance, density peaks and/or the direction and/or the strength of detected edges are preferably used as similarity values.

In an embodiment of the motion vector correction unit according to the invention, the analyzer is arranged to obtain a luminance parameter as an image property value.

An image property value based on the luminance values of pixels can be easily computed from a region. Luminance values of pixels represented in one of the known formats such as RGB, HIS or YUV can be used for comparison. A simple and useful luminance property of a region is average hue and/or color saturation.

In the motion vector correction unit according to the invention, the neighborhood is a spatial neighborhood.

A set of non-occlusion regions in the neighborhood of the occlusion region is selected as candidate regions for contributing the correct motion vector. It is highly probable that most similar non-occlusion region can be found within a spatial neighborhood of the occlusion region.

In an embodiment of the motion vector correction unit according to the invention, the motion vector correction unit is arranged to locate one of the number of non-occlusion regions in the spatial neighborhood of the occlusion region on basis of a combination of a motion vector of the occlusion region and a further motion vector of the occlusion region for analyzing, evaluating and selecting the particular non-occlusion region.

The selection of motion vectors being considered for the occlusion region comprises a background motion vector and a foreground motion vector $V_1$ and $V_2$. The motion vector correction unit according to the invention is arranged to use these motion vectors to select a number of non-occlusion regions in the neighborhood. Starting from the occlusion region and projecting a combination of the background and foreground motion vectors, e.g. $V_{c1} = V_1 - V_2$ as a first combination and $V_{c2} = V_2 - V_1$ as a second combination, typically two non-occlusion regions can be selected for further analysis of image contents. Combining these motion vectors and projecting them back to the image advantageously helps in easily identifying a neighborhood outside the occlusion region.

In the following, with temporal neighborhood is meant the neighborhood considered in an image temporally adjacent to the image under consideration. That means, the previous or next image from a sequence of images. A number of non-occlusion regions from a temporally adjacent image are considered. Apparently, the non-occlusion regions may not be available at the same coordinates, but in a spatial neighborhood of the temporal image due to motion. It is expected that image characteristics of such regions will be substantially close to the region under consideration.

In an embodiment of the motion vector correction unit according to the invention, the motion vector correction unit is arranged to locate one of the number of non-occlusion regions in the temporal neighborhood comprising the image and a further image, the image and the further image being consecutive images of a sequence of images, on basis of a motion vector of the occlusion region for analyzing, evaluating and selecting the particular non-occlusion region.

The background motion vector and the foreground motion vector $V_1$ and $V_2$ typically calculated for the occlusion region are projected back to the temporally adjacent image to select a temporal neighborhood. The requirement to select a region outside the occlusion region, being in the temporal neighborhood of the occlusion region is thus fulfilled. The selected regions may be found typically in the spatial neighborhood of the temporal image.

In an embodiment of the motion vector correction unit according to the invention, the evaluator is arranged to evaluate further similarity values which are based on a second image property value of the occlusion region and corresponding image property values of the respective non-occlusion regions, based upon a request from the selector.

A situation can arise that two or more similarity values are substantially equal and the selector is unable to select the best matching non-occlusion region. If the set of similarity values based on an image property value is not sufficient in discriminating and selecting the particular non-occlusion region, the selector sends a signal to the evaluator to compute a second set of similarity values based on a second image property value. The advantage of this method is that if the set of similarity values is insufficient to select a particular non-occlusion region due to substantially equal values, a second set of similarity values can be calculated by the system, thereby avoiding ambiguity of selection of the particular non-occlusion region.

It is a further object of the invention to provide an image processing apparatus of the kind described in the opening paragraph comprising a motion vector correction unit to correct the motion vector of the occlusion regions in an estimated motion vector field with a reduced latency. This object of the invention is achieved in that the image processing apparatus comprises:

- a receiver for receiving a signal representing a sequence of images comprising an image;
- a motion estimator for estimating a motion vector field of the image;
- an occlusion detector for detecting occlusion regions of the image;
- a motion vector correction unit for correcting the estimated motion vector field according to the invention; and
- a motion compensated image processing unit for motion compensating the image based on the corrected motion vector field.

The motion vector correction unit according to the invention receives two consecutive images of an image sequence, analyzes the image contents of neighboring non-occlusion regions of an occlusion region and extract image property values and based on the similarity values computed from the image property value, selects a non-occlusion region. The motion vector of the selected non-occlusion region is assigned to the occlusion region thereby correcting the estimated motion vector field. The image processing apparatus is arranged to carry out motion compensated processing of the sequence of images based on the corrected motion vector field.

The image processing apparatus may be arranged to support one or more of the following types of image processing:

- De-interlacing: Interlacing means common video broadcast format for transmitting the odd or even numbered image lines alternately. De-interlacing means attempting to restore full vertical resolution i.e., compute even and odd lines available simultaneously for each image.
- Up-conversion of image rate: From a series of original input images a larger series of output images is calculated. Output images are temporally located between two original input images. A temporal up-conversion of an image sequence takes place.
- Multi-view image conversion: From a sequence of 2-D input images, a sequence of 3-D images is calculated. These 3-D images are interpolated views corresponding to a number of the oriented camera positions of a 3-D scene represented by the input sequence of images.
- Noise Reduction: Processing Noise reduction is carried out for the original sequence of input images. The images are processed for spatial -temporal noise reduction.

The image processing apparatus may comprise additional components for e.g. a display device for displaying the output images or it may supply images to a connected display. The image processing apparatus can support one or more of the following types of consumer and professional apparatus by incorporating additional means: TV, a set top box, a VCR/VCP, a satellite tuner, DVD player/recorder. Optionally the image processing apparatus comprises storage means like a hard-disk or means for storage on removable media such as optical disks. The image processing apparatus might also be a system being applied by a film studio or broadcaster or re-transmitter.

It is a further object of the invention to provide a method of correction of a motion vector field with a reduced latency. This object of the invention is achieved that the method of correcting a motion vector field of an image comprising motion vectors of respective regions of an image, the method comprises:

- analyzing image contents of an occlusion region and image contents of a number of non-occlusion regions in a spatial neighborhood of the occlusion region of the image and obtaining respective image property values of the occlusion region and the non-occlusion regions ;
- evaluating similarity values which are based on an image property value of the occlusion region and further image property values of the respective non-occlusion regions;
- selecting a particular non-occlusion region from the number of non-occlusion regions on basis of the corresponding similarity value; and
- replacing the motion vector of the occlusion region by the motion vector of the selected particular non-occlusion region.

The method according to the invention corrects motion vector field from the image under consideration. For estimating the motion vector field, finding the occlusion regions and classifying them, typically two consecutive images can be used. Thus the method can carry out the motion vector correction process typically by using two images and hence works with a reduced latency compared to the prior art method.

It is a further object of the invention to provide a computer program product for instructing a computer to perform the method according to the invention.

Modifications of the motion vector correction unit, and variations thereof may correspond to modifications and variations thereof of the image processing apparatus, the method and the computer program product described.

These and other aspects of the motion vector correction unit, of the method, the image processing apparatus and of the computer program product according to the invention will become apparent from and will be elucidated with respect to the implementations and embodiments described hereinafter and with reference to the accompanying drawings wherein:

Fig. 1A schematically shows a pair of consecutive images comprising a moving object;
Fig. 1B schematically shows a 2-D representation of the situation depicted in Fig. 1A;
Fig. 2 schematically shows an embodiment of the motion vector correction unit according to the invention;
Fig. 3 schematically shows an illustration of non-occlusion regions in a spatial neighborhood of an occlusion region;
Fig. 4 schematically shows an illustration of non-occlusion regions in a temporal neighborhood of an occlusion region;
Fig. 5 schematically shows a concept of the method according to the invention; and
Fig. 6 schematically shows an embodiment of the image processing apparatus according to the invention.

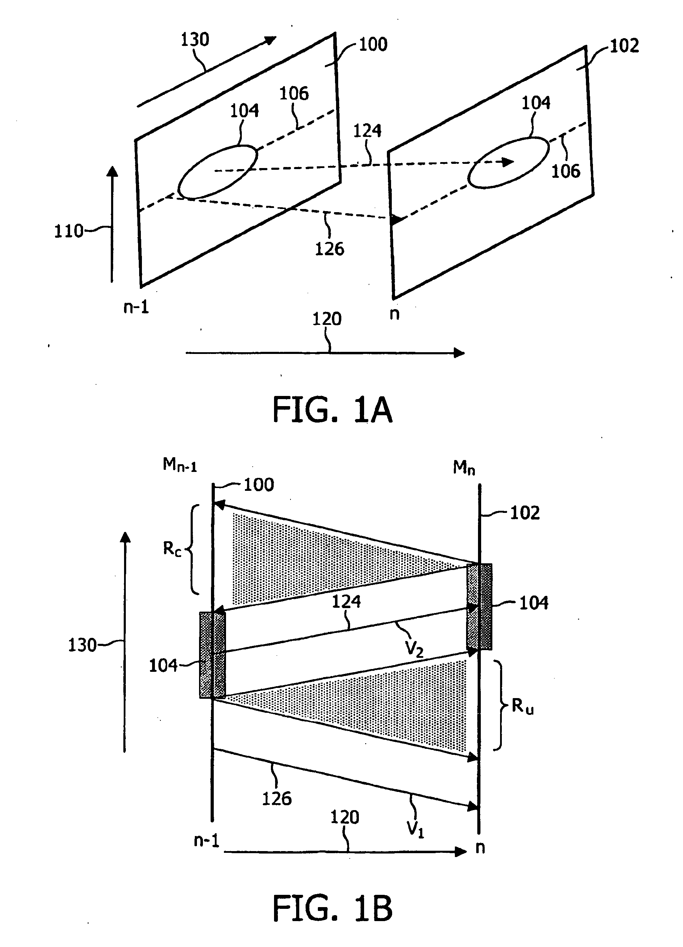

Fig 1A schematically shows a pair of consecutive images 100, 102 comprising a moving object 104. Two consecutive input images 100 and 102 are shown with an elliptically shaped object 104 at a first point in time n-1 and a subsequent point in time n , respectively. The vertical coordinates correspond with axis 110 and the horizontal coordinates correspond with the axis 130. The temporal axis 120 corresponding to time is also shown. The elliptically shaped object 104 moves from left to right in the foreground as indicated by the trajectory 124. Simultaneously, the background moves in the opposite direction with a trajectory as indicated by the arrow 126.

Fig. 1B schematically shows a 2-D representation of the situation depicted in Fig. 1A. Fig. 1B is rotated such that the temporal axis 120 and the horizontal axis 130 are visible. The moving foreground object 104 is shown as black rectangles in images 100 and 102. The background object vector 126 is assigned with a velocity $V_1$ and the foreground object vector 124 is assigned with a velocity $V_2$. Motion vector fields $M_n$ and $M_{n-1}$ have been computed for image 100 and image 102 respectively. The occlusion areas shown as gray triangles appear due to the movement of the background and the foreground objects. In these areas, motion vectors are not typically correct since the information is not present in one of the two images. In case of uncovering region $R_u$ new information appears in image 102 at time $n$, that was not present in image 100 at time $n$-1. In the case of covering region $R_c$, information present in image 100 at time $n$-1 disappears in image 102 at time $n$. In both cases, motion vector field $M_n$ is erroneous in occlusion regions. Occlusion regions have been detected and classified as covering and uncovering regions.

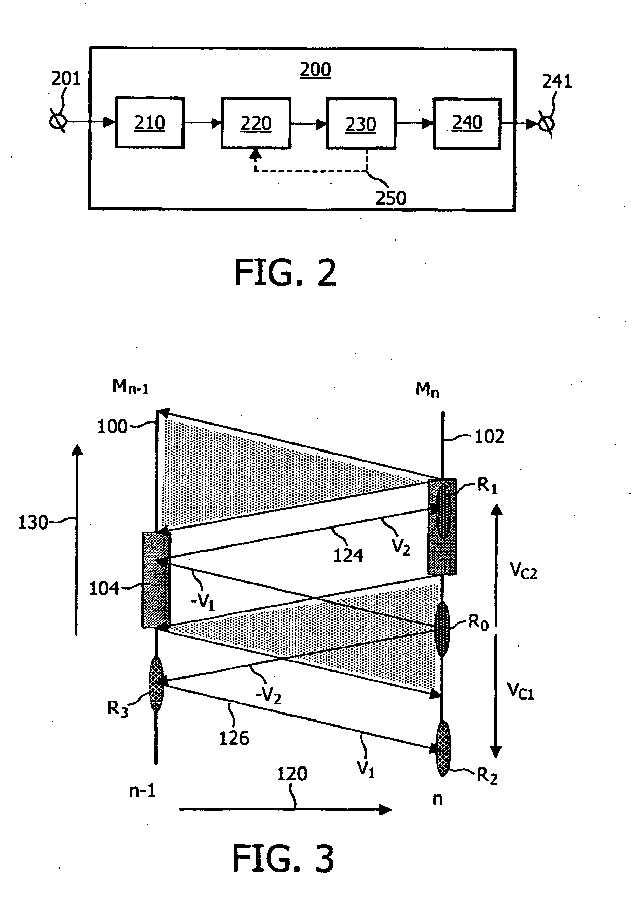

Fig. 2 schematically shows an embodiment of the motion vector correction unit according to the invention. The motion vector correction unit 200 comprises an analyzer 210, and evaluator 220, a selector 230 and a motion vector replacement unit 240. A sequence of images is supplied at the input connector 201. The motion vector field and the classified occlusion regions are also supplied for respective regions at the input 201. In general, a motion vector field can be estimated for group of pixels or regions by comparing regions of two images. One such motion estimation unit is described in the article "True motion estimation with 3-D Recursive Search Block Matching" by G. de Haan et. Al. in IEEE Transactions on circuits and systems for video technology, vol. 3, no. 5. October 1993, pages 368-379. A motion vector belongs to a region or a block of pixels under consideration.

The book "Video processing for multimedia systems", by G. de. Haan, University Press Eindhoven, 2000, ISBN 90-9014015-8, chapter 4 describes method for detection of occlusion regions and for the covering/uncovering classification. For each occlusion region, a set of motion vectors comprising e.g. a foreground motion vector and a background motion vector are typically computed. However, it is not directly known which one of the set corresponds to the foreground or background. The motion vector correction unit according to the invention is provided to detect a background motion vector and to assign it to the corresponding region, e.g. a covering region in the previous image and detect a background motion vector and assign it to the corresponding region, e.g. an uncovering region in the current image. The estimated motion vector field and classified occlusion regions are made available as inputs to the motion vector correction unit according to the invention. In some cases, in a recursive search of estimating motion vectors some of the regions may not converge to a particular motion vector. The invention maybe useful in resolving the assignment of a most probably correct motion vector in such cases.

The analyzer 210 is arranged to analyze the image contents of an occlusion region and a number of non-occlusion regions in the neighborhood of the occlusion region and compute image property values of respective regions. An image property value is computed from the pixel values in the spatial domain or in a transformed domain such as frequency domain. The image property can be a texture parameter or a luminance parameter. Luminance parameter can be derived from one or more of the components of intensity values of the pixels of the region represented in some standard formats, for e.g. RGB, HIS or YUV. An image property measure can be derived from one or more of the intensity values such as, average of one or more of the Y, U and V components, variance of Y or U or V components. Similarity value based on texture can be obtained from histogram comparison of Y or YUV, Discreet Cosine transform coefficients or Fourier transform coefficients. Another way of computing a texture parameter is by modeling the texture in the region using a stochastic model and estimating the parameters of the model.

The evaluator 220 is arranged to receive the image property values of the respective regions and compute a similarity measure of the image property value of the occlusion region with the image property value of each one of the non-occlusion regions. The evaluator 220 may employ a matching method or a difference method for obtaining a similarity value. A selection of a number of image property values for each region may be used in evaluating a similarity value a region. If more than one image property value is used in the computation of similarity value it may be a comparative measure such as sum of absolute differences or sum of squared differences.

The selector 230 is arranged to select a particular non-occlusion region best matching with the occlusion region, based on the corresponding similarity value. If the similarity value is based on an error measure, a minimum value of the similarity measure corresponds to the best matching non-occlusion region. If the similarity measure is a matching score such as a dot product of vectors, a maximum value corresponds to the best matching non-occlusion region. If the selector is unable to find the best matching non-occlusion regions with the available similarity value, it sends a request 250 for recalculation of a new set of similarity values based on further image property measures to the evaluator.

The vector replacement unit 240 replaces the motion vector of the occlusion region by the motion vector of the selected particular non-occlusion region. The motion vector belongs to the region or block of pixels under consideration. The corrected motion vector field of the input image is provided at the output connector 241 for control of further processing.

Fig. 3 schematically shows an illustration of non-occlusion regions in a spatial neighborhood of an occlusion region. Images 100 and 102 at time instances $n$-1 and $n$ are shown with a moving object 104. The foreground object velocity 124 is shown as $V_2$ and the background object velocity 126 is shown as $V_1$. After the occlusion regions are detected, one of the occlusion region e.g. $R_0$ may have vector $V_2$ assigned to it or the region $R_0$ is yet to be assigned with one of the vectors from the candidate vectors $V_1$ and $V_2$. Typically, while estimating the motion vectors, two motion vectors can become strong competitors to a single region and the iterative process may not converge. The invention is applicable in resolving such conflicting situations. A spatial neighborhood is selected with respect to an occlusion region, the neighborhood comprises regions that obviously fall outside the occlusion region $R_0$ and within the image boundaries. One method of selecting such a spatial neighborhood is to combine the two motion vectors $V_1$ and $V_2$ available for the occlusion region $V_2$ and project the combination back to the image that two non-occlusion regions are selected as candidate regions for analyzing the contents. In other words, the vector $V_2$ is projected back to reach a background region $R_3$ in the image 100 and from the background region, another vector $V_1$ is identified. By using the vector $V_1$, region $R_2$ is identified as one of the candidate regions whose motion vector can be used to replace the wrongly assigned vector of region $R_0$. Two possibilities of combining the vectors to reach two different regions in the image 102 exist, as shown below:

$$V_{c1} = V_1 - V_2 \qquad\qquad (1)$$

$$V_{c2} = V_2 - V_1 \qquad\qquad (2)$$

As illustrated in Fig. 3, e.g. $V_1$ - $V_2$ combination identifies region $R_2$ and $V_2$ - $V_1$ combination identifies region $R_1$ for further analysis. In this example, $R_1$ happens to be a foreground region. Both these regions are analyzed, image property values computed and the region that matches best with occlusion region is selected. In this example, the best matching region may be e.g. the region $R_2$. Therefore the motion vector of region $R_2$ being the background motion vector, which replaces the erroneous motion vector of the uncovering region $R_0$. Though in this illustration, correction of motion vector of an uncovering region in image 102 is depicted, an identical scheme can be applied to correct the motion vector of a covering region in image 100 as well. A skilled person, by following the same procedure can assign the correct e.g. background motion vector to the covering region in the previous image. It also follows that in case of covering region occurring in the current image, the most probably correct e.g. the foreground motion vector can be assigned by a similar scheme.

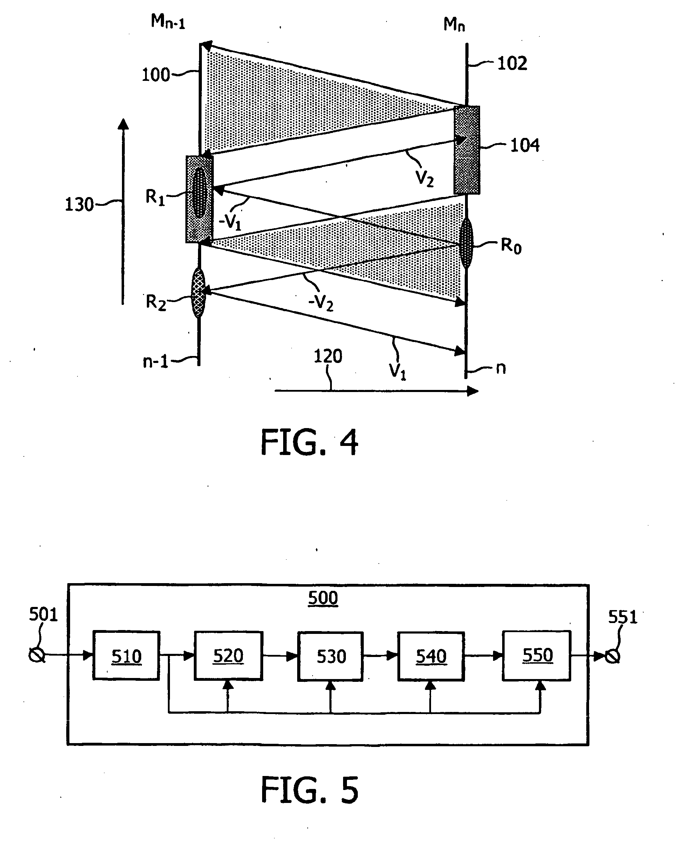

Fig. 4 schematically shows an illustration of non-occlusion regions located in a temporal neighborhood of an occlusion region. The images 102 and 100 with a moving object 104 at time instances $n$ and $n$-1 are shown. Non-occlusion regions in the temporal neighborhood can be considered for analysis of image contents. Region $R_0$ is the occlusion area. Initially, region $R_0$ may be wrongly assigned e.g. with vector $V_2$ or, at the time of estimation, two candidate vectors $V_1$ and $V_2$ may be identified but one of the two may not be assigned due to uncertainty. By using $V_1$ and $V_2$, candidate regions in image 100 may be identified. Motion vectors $V_1$ and $V_2$ are projected back to image 100 to identify two regions in the temporal neighborhood namely $R_1$ and $R_2$. The image is temporal but the regions are spatially adjacent. Image contents of $R_0$, $R_1$ and $R_2$ are analyzed, respective image property values computed and similarity values are computed to select the matching non-occlusion region for uncovering region $R_0$. It is expected that the image property value of region $R_2$ matches well with that of $R_0$. Thus an alternate embodiment of identifying candidate regions may be implemented.

When an occlusion region is substantially similar to a non-occlusion region in the spatial or temporal neighborhood, there is a possibility of selecting a wrong non-occlusion region by the selector. In some cases, similarity values may be substantially equal to each other and the selector may encounter a problem in selecting a particular non-occlusion region. The motion vector correction unit provides two schemes to resolve such ambiguous situations. In the first scheme, the selector sends a feedback signal 250 to the evaluator 220 to evaluate a new set of similarity values based on further image property measures of each one of the occlusion and non-occlusion regions. The new set of similarity values are expected to have a better discrimination for deciding the best matching non-occlusion region. In the second scheme, a new set of non-occlusion regions can be selected by extending the foreground and background vectors. Each vector is incremented by a pre-decided fraction of its respective value. The increase in vector will result in different sets of non-occlusion regions being selected as candidate regions. The increase is as small as possible in order to preserve spatial correlation, but large enough so that a new non-occlusion region can be identified in which it is expected that the computed image property value gives a similarity value for better discrimination and selection. The vectors may be incremented iteratively until a discriminatory similarity value is obtained. If the number of increments exceeds a pre-assigned number, the vector correction unit 240, for replacing the motion vector of the occlusion region may use a previously selected non-occlusion region. Similarly, in case of covering region occurring in the current image, assignment of most probably correct e.g. foreground motion vector can be carried out by following a similar procedure.

Fig. 5 schematically shows an illustration of an image processing apparatus according to the invention comprising:

- a receiver 510 for receiving a signal representing a sequence of images comprising an image;
- a motion estimator 520 for estimating a motion vector field of the image;
- an occlusion detector 530 for detecting occlusion regions of the image;
- a motion vector correction unit 540 for correcting the estimated motion vector field based on the analysis of image contents of occlusion and non-occlusion regions, evaluation of similarity values based on the image property values, selection of a particular non-occlusion region based on the similarity values and replacement of the erroneous motion vector of the occlusion region with that of the selected particular non-occlusion region; and
- a motion compensated image processing unit 550 for motion compensating the image based on the corrected motion vector field.

A sequence of images can be supplied as input to the apparatus at input connector 501 and an output can be obtained from the output connector 551 for further use.

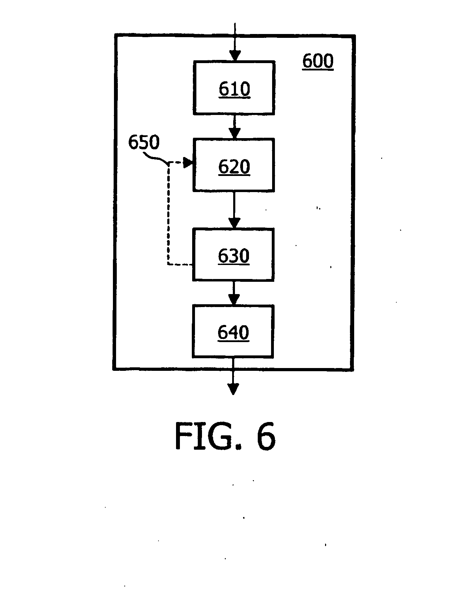

Fig. 6 schematically shows the method according to the invention. In the method 600, a sequence of images are received along with their motion vector fields and classified occlusion regions in the analysis step 610. The output of analysis step 610 comprises image property values of respective occlusion and non-occlusion regions and these values are used in the evaluation step 620 for computing similarity values. A best matching non-occlusion region is selected based on the similarity values in the selection step 630. The motion vector of the selected particular non-occlusion region in the vector replacement step 640 replaces the motion vector of the occlusion region. In case of similarity values not having enough discrimination to select a particular value, the selector 630 sends a request 650 to the evaluator in order to evaluate a second set of similarity values based on a second image property value of the respective regions.

The computer program product can be handled in a standard comprised or detachable storage, e.g. flash memory or hard disk. The computer program product may be embedded in a device such as an integrated circuit or a computing machine as embedded software or kept pre-loaded or loaded from one of the standard storage or memory devices. The computer program product may be presented in any one of the known codes such as machine level codes or assembly languages or higher level languages and made to operate on any of the available platforms such as hand-held devices or personal computers or servers.

It should be noted that the above-mentioned embodiments illustrate rather than limit the invention and those skilled in the art will be able to design alternate embodiments without departing from the scope of the appended claims. In the claims, any reference signs placed between parentheses shall not be construed as limiting the claim. The word 'comprising' does not exclude the presence of elements or steps not listed in a claim. The word 'a' or 'an' preceding an element does not exclude the presence of a plurality of such elements. The invention can be implemented by means of a suitable programmed computer. In the unit claims enumerating several means, several of these means can be embodied by one and the same item of hardware.

**Claims**

1. A motion vector correction unit (200) for correcting a motion vector field ($M_n$) comprising motion vectors of respective regions of an image (102), the motion vector correction unit comprising:

   - an analyzer (210) arranged to analyze image contents of an occlusion region ($R_0$) and image contents of a number of non-occlusion regions ($R_1$, $R_2$) in a spatial neighborhood of the occlusion region of the image (102) and to obtain respective image property values of the occlusion region ($R$) and the non-occlusion regions ($R_1$, $R_2$);
   - an evaluator (220) arranged to evaluate similarity values which are based on an image property value of the occlusion region ($R_0$) and further image property values of the respective non-occlusion regions ($R_1$, $R_2$);
   - a selector (230) arranged to select a particular non-occlusion region ($R_2$) from the number of non-occlusion regions ($R_1$, $R_2$) on basis of the corresponding similarity value; and
   - a vector replacement unit (240) arranged to replace the motion vector of the occlusion region ($R_0$) by the motion vector of the selected particular non-occlusion region ($R_2$).

2. A motion vector correction unit (200) as claimed in claim 1, wherein the analyzer (210) is arranged to obtain a texture parameter as an image property value.

3. A motion vector correction unit (200) as claimed in claim 1, wherein the analyzer (210) is arranged to obtain a luminance parameter as an image property value.

4. A motion vector correction unit (200) according to claim 1, wherein the motion vector correction unit (200) is arranged to locate one of the number of non-occlusion regions ($R_1$, $R_2$) in the spatial neighborhood of the occlusion region ($R_0$) on basis of a combination of a motion vector ($V_1$) of the occlusion region ($R_0$) and a further motion vector ($V_2$) of the occlusion region ($R_0$) for analyzing, evaluating and selecting the particular non-occlusion region.

5. A motion vector correction unit (200) according to claim 1 wherein the motion vector correction unit is arranged to locate one of the number of non-occlusion regions ($R_1$, $R_2$) in a temporal neighborhood comprising the image (102) and a further image (100), the image (102) and the further image (100) being consecutive images of a sequence of images, on basis of a motion vector ($-V_1$, $-V_2$) of the occlusion region ($R_0$) for analyzing, evaluating and selecting the particular non-occlusion region.

6. A motion vector correction unit (200) as claimed in claim 1, wherein the evaluator (220) is arranged to evaluate further similarity values which are based on a second image property value of the occlusion region ($R_0$) and corresponding image property values of the respective non-occlusion regions ($R_1$, $R_2$), based upon a request from the selector (230).

7. An image processing apparatus (500) comprising:

- a receiver (510) for receiving a signal representing a sequence of images comprising an image;
- a motion estimator (520) for estimating a motion vector field of the image;
- an occlusion detector (530) for detecting occlusion regions of the image;
- a motion vector correction unit (540) for correcting the estimated motion vector field as claimed in any one of the claims 1 to 6; and
- a motion compensated image processing unit (550) for motion compensating the image based on the corrected motion vector field.

8. An image processing apparatus (500) as claimed in claim 7, wherein the motion compensated image processing unit (550) is arranged to de-interlace the received sequence of images on basis of the corrected motion vector field.

9. An image processing apparatus (500) as claimed in claim 7, wherein the motion compensated image processing unit (550) is arranged to temporally up-convert the received sequence of images on basis of the corrected motion vector field.

10. An image processing apparatus (500) as claimed in claim 7, wherein the motion compensated image processing unit (550) is arranged to convert the sequence of images into a sequence of multi-view images on basis of the corrected motion vector field.

11. An image processing apparatus (500) as claimed in claim 7, wherein the motion compensated image processing unit (550) is arranged to reduce noise in the received sequence of images on basis of the corrected motion vector field.

12. An image processing apparatus (500) as claimed in any one of the claims 7 to 11, further comprising a display device for displaying the motion compensated image.

13. A method (600) of correcting a motion vector field of an image comprising motion vectors of respective regions of an image, the method comprising:

- analyzing (610) image contents of an occlusion region ($R_0$) and images contents of a number of non-occlusion regions ($R_1$, $R_2$) in a spatial neighborhood of the occlusion region ($R_0$) of the image (102) and obtaining respective image property values of the occlusion region ($R_0$) and the non-occlusion regions ($R_1$, $R_2$);
- evaluating (620) similarity values which are based on an image property value of the occlusion region ($R_0$) and further image property values of the respective non-occlusion regions ($R_1$, $R_2$);
- selecting (630) a particular non-occlusion region ($R_2$) from the number of non-occlusion regions ($R_1$, $R_2$) on basis of the corresponding similarity value; and
- replacing (640) the motion vector of the occlusion region ($R_0$) by the motion vector of the selected particular non-occlusion region ($R_2$).

14. A computer program product (700) for instructing a computer to perform the method of claim 13.

**Patentansprüche**

1. Bewegungsvektorkorrektureinheit (200) zum Korrigieren eines Bewegungsvektorfelds ($M_n$), das Bewegungsvektoren jeweiliger Regionen eines Bildes (102) umfasst, wobei die Bewegungsvektorkorrektureinheit Folgendes umfasst:

- einen Analysator (210), der dazu vorgesehen ist, Bildinhalte einer Okklusionsregion ($R_0$) und Bildinhalte einer Anzahl von Nichtokklusionsregionen ($R_1$, $R_2$) in einer räumlichen Nachbarschaft der Okklusionsregion des Bildes (102) zu analysieren und jeweilige Bildeigenschaftswerte der Okklusionsregion ($R_0$) und der Nichtokklusionsregionen ($R_1$, $R_2$) zu erlangen;
- einen Bewerter (220), der dazu vorgesehen ist, Ähnlichkeitswerte zu bewerten, die auf einem Bildeigenschafts-

wert der Okklusionsregion ($R_0$) und weiteren Bildeigenschaftswerten der jeweiligen Nichtokklusionsregionen ($R_1$, $R_2$) basieren;
- einen Selektor (230), der dazu vorgesehen ist, auf Grundlage des entsprechenden Ähnlichkeitswerts eine bestimmte Nichtokklusionsregion ($R_2$) aus der Anzahl von Nichtokklusionsregionen ($R_1$, $R_2$) auszuwählen; und
- eine Vektorersetzungseinheit (240), die dazu vorgesehen ist, den Bewegungsvektor der Okklusionsregion ($R_0$) durch den Bewegungsvektor der ausgewählten bestimmten Nichtokklusionsregion ($R_2$) zu ersetzen.

2. Bewegungsvektorkorrektureinheit (200) nach Anspruch 1, wobei der Analysator (210) dazu vorgesehen ist, einen Strukturparameter als einen Bildeigenschaftswert zu erlangen.

3. Bewegungsvektorkorrektureinheit (200) nach Anspruch 1, wobei der Analysator (210) dazu vorgesehen ist, einen Luminanzparameter als einen Bildeigenschaftswert zu erlangen.

4. Bewegungsvektorkorrektureinheit (200) nach Anspruch 1, wobei die Bewegungsvektorkorrektureinheit (200) dazu vorgesehen ist, auf Grundlage einer Kombination eines Bewegungsvektors ($V_1$) der Okklusionsregion ($R_0$) und eines weiteren Bewegungsvektors ($V_2$) der Okklusionsregion ($R_0$) eine der Anzahl von Nichtokklusionsregionen ($R_1$, $R_2$) in der räumlichen Nachbarschaft der Okklusionsregion ($R_0$) zu orten, um die bestimmte Nichtokklusionsregion zu analysieren, zu bewerten und auszuwählen.

5. Bewegungsvektorkorrektureinheit (200) nach Anspruch 1, wobei die Bewegungsvektorkorrektureinheit dazu vorgesehen ist, auf Grundlage eines Bewegungsvektors ($-V_1$, $-V_2$) der Okklusionsregion ($R_0$) eine der Anzahl von Nichtokklusionsregionen ($R_1$, $R_2$) in einer zeitlichen Nachbarschaft zu orten, die das Bild (102) und ein weiteres Bild (100) umfasst, wobei das Bild (102) und das weitere Bild (100) aufeinanderfolgende Bilder einer Bildfolge sind, um die bestimmte Nichtokklusionsregion zu analysieren, zu bewerten und auszuwählen.

6. Bewegungsvektorkorrektureinheit (200) nach Anspruch 1, wobei der Bewerter (220) dazu vorgesehen ist, auf Grundlage einer Anforderung des Selektors (230) weitere Ähnlichkeitswerte zu bewerten, die auf einem zweiten Bildeigenschaftswert der Okklusionsregion ($R_0$) und entsprechenden Bildeigenschaftswerten der jeweiligen Nichtokklusionsregionen ($R_1$, $R_2$) beruhen.

7. Bildverarbeitungsvorrichtung (500), umfassend:

- einen Empfänger (510) zum Empfangen eines Signals, das eine Bildfolge darstellt, die ein Bild umfasst;
- einen Bewegungsschätzer (520) zum Schätzen eines Bewegungsvektorfelds des Bildes;
- einen Okklusionsdetektor (530) zum Erkennen von Okklusionsregionen des Bildes;
- eine Bewegungsvektorkorrektureinheit (540) zum Korrigieren des geschätzten Bewegungsvektorfelds nach einem der Ansprüche 1 bis 6; und
- eine bewegungskompensierte Bildverarbeitungseinheit (550) zur Bewegungskompensierung des Bildes auf Grundlage des korrigierten Bewegungsvektorfelds.

8. Bildverarbeitungsvorrichtung (500) nach Anspruch 7, wobei die bewegungskompensierte Bildverarbeitungseinheit (550) dazu vorgesehen ist, die empfangene Bildfolge auf Grundlage des korrigierten Bewegungsvektorfelds zu entflechten.

9. Bildverarbeitungsvorrichtung (500) nach Anspruch 7, wobei die bewegungskompensierte Bildverarbeitungseinheit (550) dazu vorgesehen ist, die empfangene Bildfolge auf Grundlage des korrigierten Bewegungsvektorfelds zeitlich aufwärts zu wandeln.

10. Bildverarbeitungsvorrichtung (500) nach Anspruch 7, wobei die bewegungskompensierte Bildverarbeitungseinheit (550) dazu vorgesehen ist, die Bildfolge auf Grundlage des korrigierten Bewegungsvektorfelds in eine Folge von Mehrfachansichtsbildern umzuwandeln.

11. Bildverarbeitungsvorrichtung (500) nach Anspruch 7, wobei die bewegungskompensierte Bildverarbeitungseinheit (550) dazu vorgesehen ist, auf Grundlage des korrigierten Bewegungsvektorfelds Rauschen in der empfangenen Bildfolge zu reduzieren.

12. Bildverarbeitungsvorrichtung (500) nach einem der Ansprüche 7 bis 11, ferner umfassend eine Anzeigevorrichtung zum Anzeigen des bewegungskompensierten Bilds.

**13.** Verfahren (600) zum Korrigieren eines Bewegungsvektorfelds eines Bildes, das Bewegungsvektoren jeweiliger Regionen eines Bildes umfasst, wobei das Verfahren Folgendes umfasst:

- Analysieren (610) von Bildinhalten einer Okklusionsregion ($R_0$) und Bildinhalten einer Anzahl von Nichtokklusionsregionen ($R_1$, $R_2$) in einer räumlichen Nachbarschaft der Okklusionsregion ($R_0$) des Bildes (102) und Erlangen jeweiliger Bildeigenschaftswerte der Okklusionsregion ($R_0$) und der Nichtokklusionsregionen ($R_1$, $R_2$);
- Bewerten (620) von Ähnlichkeitswerten, die auf einem Bildeigenschaftswert der Okklusionsregion ($R_0$) und weiteren Bildeigenschaftswerten der jeweiligen Nichtokklusionsregionen ($R_1$, $R_2$) basieren;
- Auswählen (630) einer bestimmten Nichtokklusionsregion ($R_2$) aus der Anzahl von Nichtokklusionsregionen ($R_1$, $R_2$) auf Grundlage des entsprechenden Ähnlichkeitswerts; und
- Ersetzen (640) des Bewegungsvektors der Okklusionsregion ($R_0$) durch den Bewegungsvektor der ausgewählten bestimmten Nichtokklusionsregion ($R_2$).

**14.** Computerprogrammprodukt (700) zum Anweisen eines Computers, das Verfahren nach Anspruch 13 auszuführen.

**Revendications**

**1.** Unité (200) de correction de vecteur de mouvement permettant de corriger un champ vectoriel de mouvement ($M_n$) comprenant des vecteurs de mouvement de régions respectives d'une image (102), l'unité de correction de vecteur de mouvement comprenant :

un analyseur (210) conçu pour analyser un contenu d'image d'une région d'occlusion ($R_0$) et un contenu d'image d'un certain nombre de régions de non-occlusion ($R_1$, $R_2$) dans un voisinage spatial de la région d'occlusion de l'image (102), et pour obtenir des valeurs respectives de propriété d'image de la région d'occlusion ($R_0$) et des régions de non-occlusion ($R_1$, $R_2$) ;
un évaluateur (220) conçu pour évaluer des valeurs de similitude qui sont fondées sur une valeur de propriété d'image de la région d'occlusion ($R_0$) et d'autres valeurs de propriété d'image des régions respectives de non-occlusion ($R_1$, $R_2$) ;
un sélecteur (230) conçu pour sélectionner une région particulière de non-occlusion ($R_2$) à partir du nombre de régions de non-occlusion ($R_1$, $R_2$), en fonction de la valeur correspondante de similitude ; et
une unité de remplacement de vecteurs (240) conçue pour remplacer le vecteur de mouvement de la région d'occlusion ($R_0$) par le vecteur de mouvement de la région particulière de non-occlusion ($R_2$).

**2.** Unité (200) de correction de vecteur de mouvement selon la revendication 1, dans laquelle l'analyseur (210) est conçu pour obtenir un paramètre de texture sous la forme d'une valeur de propriété d'image.

**3.** Unité (200) de correction de vecteur mouvement selon la revendication 1, dans laquelle l'analyseur (210) est conçu pour obtenir un paramètre de luminance sous la forme d'une valeur de propriété d'image.

**4.** Unité (200) de correction de vecteur de mouvement selon la revendication 1, dans laquelle l'unité (200) de correction de vecteur de mouvement est conçue pour localiser l'une des régions de non-occlusion ($R_1$, $R_2$) dans le voisinage spatial de la région d'occlusion ($R_0$) en fonction d'une combinaison de vecteur mouvement ($V_1$) de la région d'occlusion ($R_0$) et un autre vecteur mouvement ($V_2$) de la région d'occlusion ($R_0$) pour analyser, évaluer et sélectionner la région particulière de non-occlusion.

**5.** Unité (200) de correction de vecteur mouvement selon la revendication 1, dans laquelle l'unité de correction de vecteur mouvement est conçue pour localiser l'une des régions de non-occlusion ($R_1$, $R_2$) dans un voisinage temporel comprenant l'image (102) et une autre image (100), l'image (102) et l'autre image (100) étant des images consécutives d'une séquence d'images, en fonction d'un vecteur mouvement ($-V_1$, $-V_2$) de la région d'occlusion ($R_0$) pour analyser, évaluer et sélectionner la région particulière de non-occlusion.

**6.** Unité (200) de correction de vecteur de mouvement selon la revendication 1, dans laquelle l'évaluateur (220) est conçu pour évaluer d'autres valeurs de similitude qui sont fondées sur une deuxième valeur de propriété d'image de la région d'occlusion ($R_0$) et sur les valeurs correspondantes de propriété d'image des régions respectives de non-occlusion ($R_1$, $R_2$), en fonction d'une demande du sélecteur (230).

**7.** Appareil (500) de traitement d'images comprenant :

un récepteur (510) permettant de recevoir un signal représentant une séquence d'images comprenant une image ;

un estimateur de mouvement (520) permettant d'estimer un champ vectoriel de mouvement de l'image ;

un détecteur d'occlusion (530) permettant de détecter des régions d'occlusion de l'image ;

une unité (540) de correction de vecteur de mouvement permettant de corriger le champ vectoriel estimé de mouvement selon l'une quelconque des revendications 1 à 6 ; et

une unité (550) de traitement d'image compensée de mouvement, permettant la compensation de mouvement de l'image en fonction du champ vectoriel corrigé de mouvement.

8. Appareil (500) de traitement d'images selon la revendication 7, dans lequel l'unité (550) de traitement d'image compensée de mouvement est conçue pour désentrelacer la séquence reçue d'images en fonction du champ vectoriel corrigé de mouvement.

9. Appareil (500) de traitement d'images selon la revendication 7, dans lequel l'unité (550) de traitement d'image compensée de mouvement est conçue pour convertir vers le haut temporairement la séquence reçue d'images en fonction du champ vectoriel corrigé de mouvement.

10. Appareil (500) de traitement d'images selon la revendication 7, dans lequel l'unité (550) de traitement d'image compensée de mouvement est conçue pour convertir la séquence d'images en une séquence d'images à vues multiples en fonction du champ vectoriel corrigé de mouvement.

11. Appareil (500) de traitement d'images selon la revendication 7, dans lequel l'unité (550) de traitement d'image compensée de mouvement est conçue pour réduire le bruit dans la séquence reçue d'images en fonction du champ vectoriel corrigé de mouvement.

12. Appareil (500) de traitement d'images selon l'une quelconque des revendication 7 à 11, comprenant en outre un dispositif d'affichage permettant d'afficher l'image compensée de mouvement.

13. Procédé (600) de correction d'un champ vectoriel de mouvement d'une image comprenant des vecteurs de mouvement de régions respectives d'une image, ce procédé comprenant :

l'analyse (610) de contenus d'images d'une région d'occlusion ($R_0$) et de contenus d'images d'un certain nombre de régions de non-occlusion ($R_1$, $R_2$) dans un voisinage spatial de la région d'occlusion ($R_0$) de l'image (102) et l'obtention de valeurs respectives de propriété d'image de la région d'occlusion ($R_0$) et des régions de non-occlusion ($R_1$, $R_2$) ;

l'évaluation (620) de valeurs de similitude qui sont fondées sur une valeur de propriété d'image de la région d'occlusion ($R_0$) et d'autres valeurs de propriété d'image des régions respectives de non-occlusion ($R_1$, $R_2$) ;

le choix (630) d'une région particulière de non-occlusion ($R_2$) dans l'ensemble des régions de non-occlusion ($R_1$, $R_2$) en fonction de la valeur correspondante de similitude ; et

le remplacement (640) du vecteur mouvement de la région d'occlusion ($R_0$) par le vecteur mouvement de la région particulière de non-occlusion ($R_2$).

14. Produit de type programme informatique (700) permettant d'instruire un ordinateur pour qu'il exécute le procédé de la revendication 13.

FIG. 1A

FIG. 1B

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03067523 A

**Non-patent literature cited in the description**

- **G. DE. HAAN.** True-motion estimation with 3D-recursive Search Block Matching. *IEEE Transactions on Circuits and Systems for Video Technology,* October 1993, vol. 3 (5), 368-379
- Motion compensating interpolation considering occluding, appearing and disappearing areas. **P. ROBERT.** Signal Processing of HDTV III. Elsevier Science, 1992

- **G. DE. HAAN.** Video processing for multimedia systems. University Press Eindhoven, 2000
- **G. DE HAAN.** True motion estimation with 3-D Recursive Search Block Matching. *IEEE Transactions on circuits and systems for video technology,* October 1993, vol. 3 (5), 368-379